# EUROPÄISCHE PATENTSCHRIFT

(11) **EP 3 044 560 B1**
(45) Veröffentlichungstag und Bekanntmachung des Hinweises auf die Patenterteilung: **28.06.2017**
(21) Anmeldenummer: 14799327.3
(22) Anmeldetag: 09.09.2014
(51) Int. Cl.: G01M 5/00, G01N 3/04, E21D 11/38

(54) **PRÜFVORRICHTUNG ZUR PRÜFUNG VON DICHTUNGEN MIT VERANKERUNGSFÜSSEN**
TESTING DEVICE FOR TESTING SEALS HAVING ANCHORING FEET
DISPOSITIF SERVANT À CONTRÔLER DES ÉLÉMENTS D'ÉTANCHÉITÉ COMPORTANT DES PIEDS D'ANCRAGE

(30) Priorität: 13.09.2013 DE 102013218447; 01.10.2013 DE 102013110928
(43) Veröffentlichungstag der Anmeldung: 20.07.2016
(73) Patentinhaber: Dätwyler Sealing Technologies Deutschland GmbH, 99880 Waltershausen (DE)
(72) Erfinder: FISCHER, Marc, 99880 Hörsel OT Teutleben (DE); PASEMANN, Oliver, 36205 Sontra (DE); STENDER, Matthias, 99867 Gotha (DE)
(74) Vertreter: Stüven, Ralf
(86) Internationale Anmeldenummer: PCT/DE2014/200461
(87) Internationale Veröffentlichungsnummer: WO 2015/035994

(56) Entgegenhaltungen:
- DE-A1- 10 222 032
- DE-U1- 8 916 280
- Thomas Flath ET AL: "STUVA-Empfehlung für die Prüfung und den Einsatz von Dichtungsprofilen in Tübbingauskleidungen", , 1. Januar 2005 (2005-01-01), Seiten 8-21, XP055183530, Gefunden im Internet: URL:http://www.stuvatec.de/dokumente/STUVA -Empfehlung_REC_8_2005_02.pdf [gefunden am 2015-04-16]
- Thomas Flath ET AL: "STUVA-Empfehlung für die Verwendung von Dichtungsrahmen in Tübbingauskleidungen", Tunnel 2/2006, 1. Januar 2006 (2006-01-01), Seiten 28-33, XP055183905, Gefunden im Internet: URL:http://www.stuvatec.de/dokumente/STUVA -Empfehlung_REC_2_2006_02.pdf [gefunden am 2015-04-17]
- Jörg Schreyer: "Abdichtungen von einschaligen Tübbingauskleidungen mit Dichtungsprofilen", Unterirdisches Bauen 2001, Forschung und Praxis 39, 1. Januar 2001 (2001-01-01), Seiten 142-149, XP055183519, Köln Gefunden im Internet: URL:http://www.stuvatec.de/dokumente/Schre yer_Abdichtung_einschaliger_Tunnelauskleid ungen.pdf [gefunden am 2015-04-16]

## Beschreibung

Die Erfindung betrifft eine Prüfvorrichtung zur Prüfung von Dichtungen, insbesondere Tübbingdichtungen, mit mindestens einem Verankerungsfuß, die Verwendung der Prüfvorrichtung und ein Verfahren zur Prüfung von Dichtungen mit mindestens einem Verankerungsfuß.

Prüfvorrichtungen zur Prüfung von Dichtungen, die bei Schacht- oder Tunnelbauten verwendet werden, beispielsweise Dichtungsprofilen von Tübbingen, sind grundsätzlich bekannt (s. z.B. Schreyer, Jörg, 2001, Abdichtungen von einschaligen Tübbingauskleidungen mit Dichtungsprofilen, In: Studiengesellschaft für Unterirdische Verkehrsanlagen e.V. (STUVA) Köln (Hrsg.), Unterirdisches Bauen 2001, Forschung und Praxis 39, S.142-149; Flath, T. et al., 2005, STUVA-Empfehlung für die Prüfung und den Einsatz von Dichtungsprofilen in Tübbingauskleidungen, TUNNEL 8/2005; http://www.stuvatec.de/stuvatec-02_036.htm).

Zur Prüfung von Dichtungen mit Verankerungsfüßen, wie sie beispielsweise im Tunnelbau häufig verwendet werden, ist es bislang erforderlich, eigens zu Prüfzwecken entsprechende Betonprüfkörper herzustellen, in welchen die Dichtungen verankert werden, was sehr material-, zeit- und kostenaufwändig ist. Nachteilig ist auch, dass für verschiedene Dichtungen jeweils daran angepasste Betonprüfkörper hergestellt und dafür beispielsweise auch entsprechende Gussformen vorgehalten werden müssen. Eine praxisnahe Prüfung am T-Stoß oder Kreuz-Stoß kann bisher mit Prüfkörpern aus Beton nur mit enormem Aufwand realisiert werden und ist damit praktisch noch nicht möglich.

Aufgabe der vorliegenden Erfindung ist es, die Möglichkeiten zur Prüfung von Dichtungen, insbesondere Tübbingdichtungen, mit Verankerungsfüßen zu verbessern.

Gelöst wird die Aufgabe durch die Gegenstände der nebengeordneten Ansprüche 1, 8 und 9. Zweckdienliche Ausgestaltungen der Erfindung sind in den abhängigen Ansprüchen angegeben.

Die von der vorliegenden Erfindung bereitgestellte Prüfvorrichtung zur Prüfung von Dichtungen, insbesondere Tübbingdichtungen, mit mindestens einem Verankerungsfuß, umfasst mindestens eine erste Platte mit einer eine erste Ausnehmung aufweisenden ersten Fläche und mindestens eine zweite Platte mit einer eine zweite Ausnehmung aufweisenden zweiten Fläche, wobei die Flächen der Platten einander zumindest teilweise mit ihren Ausnehmungen im Wesentlichen gegenüberliegen, und wobei in der ersten und zweiten Ausnehmung jeweils mindestens zwei Plattenelemente lösbar befestigt sind, wobei die Plattenelemente so ausgestaltet und angeordnet sind, dass sie, gegebenenfalls unter Einbeziehung der Wandung oder Teilen der Wandung der Ausnehmungen, in den Ausnehmungen jeweils eine Nut ausbilden, in die eine mindestens einen Verankerungsfuß aufweisende Dichtung derart einlegbar ist, dass die Dichtung mittels eines zwischen den Plattenelementen und dem mindestens einen Verankerungsfuß gebildeten Formschlusses verankert ist, oder zwischen den Plattenelementen und dem mindestens einen Verankerungsfuß der Dichtung ein Zwischenraum gebildet ist, in den ein aushärtendes oder aushärtbares Material einbringbar ist, so dass die Dichtung nach dem Aushärten des Materials mittels eines zwischen den Plattenelementen, dem ausgehärteten Material und dem mindestens einen Verankerungsfuß gebildeten Formschlusses verankert ist.

Der Grundgedanke der Erfindung besteht darin, eine an verschiedene Dichtungen leicht und kostengünstig anpassbare Prüfvorrichtung dadurch bereitzustellen, dass Platten mit einer Ausnehmung verwendet werden, in die entsprechend ausgestaltete Plattenelemente lösbar eingelegt werden, so dass verschiedene Nutformen nachgebildet werden können. Die Ausnehmung fungiert somit als eine Art "Universalnut", die mittels der Plattenelemente, gegebenenfalls unter Zuhilfenahme eines aushärtenden oder aushärtbaren Materials, an die jeweilige Geometrie des zu testenden Dichtungsprofils angepasst werden kann. Die Plattenelemente dienen gleichzeitig auch dazu, Dichtungen mit Verankerungsfüßen direkt, d.h. durch unmittelbaren Kontakt zwischen den Plattenelementen und den Verankerungsfüßen oder indirekt, d.h. über das aushärtende oder aushärtbare Material, formschlüssig zu verankern. Auf diese Weise ist es möglich, eine Prüfvorrichtung für unterschiedliche Dichtungsprofile und mehrfach zu verwenden. Es ist lediglich erforderlich, einen Satz von Plattenelementen in die Ausnehmung einzulegen, die an die jeweilige Geometrie des Dichtungsprofils angepasst sind, oder die einen Zwischenraum zwischen den Plattenelementen und der Dichtung bzw. deren Verankerungsfuß/Verankerungsfüßen bilden, in den das aushärtende oder aushärtbare Material eingebracht werden kann, so dass über das ausgehärtete Material indirekt ein Formschluss zwischen Plattenelementen und Verankerungsfuß/Verankerungsfüßen hergestellt ist. Dadurch können beispielsweise Prüfvorrichtungen aus Metall (z.B. Stahl) oder auch Kunststoff verwendet werden. Das Gießen von vollständigen Betonprüfkörpern erübrigt sich.

Bei der erfindungsgemäßen Prüfvorrichtung mit einem solchen flexibel einsetzbaren Aufnahme- und Befestigungssystem für insbesondere strangförmige Dichtungen mit Verankerungsfüßen sind mindestens zwei Plattenelemente vorgesehen, mit deren Hilfe eine Nut für eine Dichtung mit mindestens einem Verankerungsfuß in der Ausnehmung nachgebildet oder ein Zwischenraum zur Aufnahme des aushärtenden oder aushärtbaren Materials gebildet werden kann. Die Plattenelemente bilden mit ihren Randflächen innerhalb der Ausnehmung eine Nut aus, in die eine Dichtung mit mindestens einem Verankerungsfuß eingelegt werden kann. Der mindestens eine Verankerungsfuß ist dabei in einer Ausgestaltung von den Plattenelementen so eingefasst, dass die Dichtung in der Platte verankert ist. Statt in Beton eingebettet zu sein ist der Verankerungsfuß in dieser Ausgestaltung von den Plattenelementen umgeben und die Dichtung auf diese Weise verankert, wodurch eine Testsituation nachgebildet ist, wie sie bei einem Betonprüfkörper gemäß dem Stand der Technik vorliegen würde. In einer alternativen Ausgestaltung ist zwischen dem mindestens einen Verankerungsfuß und den Plattenelementen ein Zwischenraum vorhanden, in den ein aushärtendes oder aushärtbares Material einbringbar ist, so dass die Dichtung nach dem Aushärten des Materials verankert ist. Diese alternative Ausgestaltung ermöglicht die Simulierung einer Situation, die der späteren Einbausituation beispielsweise in einem Betontübbing, noch näher kommt. In einer Ausgestaltung dieser alternativen Ausführungsform der erfindungsgemäßen Prüfvorrichtung können die Plattenelemente so ausgestaltet sein, dass sie der Geometrie der Dichtung im Bereich der Verankerungsfüße im Wesentlichen folgen, wobei jedoch ein mit dem aushärtenden oder aushärtbaren Material füllbarer Spalt zwischen den Plattenelementen und den Verankerungsfüßen verbleibt. In anderen Ausgestaltungen kann die Ausgestaltung der Plattenelemente sich lediglich daran orientieren, dass ein wirksamer Formschluss und damit eine ausreichende Verankerung der Dichtung erfolgt. Das kann beispielsweise durch Hinterschneidungen, Ausnehmungen und dergleichen in den zu den Verankerungsfüßen gewendeten Plattenelementflächen erreicht werden.

Die erfindungsgemäße Prüfvorrichtung kann in ihrer Ausgestaltung an verschiedene Prüfsituationen angepasst werden. Beispielsweise kann die Prüfvorrichtung zur Prüfung des Kraft-Weg-Verhaltens von einfachen Dichtungssträngen oder von Rahmenecken, oder auch zur Prüfung der Dichtigkeit von Dichtungsrahmen ausgestaltet sein.

In einer bevorzugten Ausführungsform sind mindestens drei Plattenelemente vorhanden, beispielsweise für den häufigen Fall einer Dichtung mit zwei Verankerungsfüßen. Dabei bilden zwei äußere Plattenelemente und ein dazwischen angeordnetes drittes Plattenelement eine Nut, in die eine Dichtung mit zwei Verankerungsfüßen eingelegt und mittels Formschluss durch die Plattenelemente auch gleichzeitig verankert werden kann. Im Fall komplizierterer Geometrien können auch weitere Plattenelemente vorgesehen sein. Die Plattenelemente können jeweils einstückig oder mehrstückig sein, d.h. jeweils aus einem einzelnen oder aus mehreren Einzelteilen bestehen. Alternativ kann durch die äußeren Plattenelemente jeweils ein Zwischenraum gebildet sein zwischen den zur Dichtung gerichteten Flächen der Plattenelemente und den zu den Plattenelementen gerichteten Flanken der beiden Verankerungsfüße. In den Zwischenraum ist ein aushärtendes oder aushärtbares Material eingebracht, mittels dessen im ausgehärteten Zustand eine Verankerung der Dichtung erfolgt.

Unter einem "Verankerungsfuß" wird hier ein Dichtungsfortsatz verstanden, der in ein späteres Formteil, z.B. Betonformteil, hineinragt und einen Formschluss zwischen Profil und Formteil bewirkt, so dass das Profil an bzw. in dem ausgehärteten Formteil so befestigt ist, dass es ohne Beschädigung des Formteils und/oder des Profils (z.B. durch Abreißen des Profilfortsatzes) nicht entfernt werden kann. Hierzu können die Profilfortsätze beispielsweise schwalbenschwanzartig oder allgemein mit einem zum distalen Fortsatzende hin zunehmenden Querschnitt ausgestaltet sein. Ein Verankerungsfuß kann alternativ oder zusätzlich auch mit Widerhaken, Hinterschneidungen und dergleichen versehen sein.

Mit "T-Stoß" ist hier eine Situation gemeint, bei der Fugen, z.B. Ring- und Längsfugen von Tunneltübbingen, so aufeinanderstoßen, dass eine T-förmige Fuge resultiert. "Kreuz-Stoß" bedeutet entsprechend eine Situation, bei der zwischen den Tübbingen eine kreuzförmige Fuge ausgebildet ist.

Unter einer "echten Rahmenecke" ist, im Gegensatz zu einer "Bilderrahmenecke", eine Ecke in einem Dichtungsprofil zu verstehen, bei der eine strangförmiges Dichtungsprofil zur Profilbasis hin gewinkelt ist. Eine "Bilderrahmenecke" ist demgegenüber eine Ecke, die entsteht, wenn ein strangförmiges Dichtungsprofil zu einer der seitlichen Flanken hin gewinkelt ist.

Unter einem "aushärtenden oder aushärtbaren Material" wird hier ein zunächst fließfähiges, später jedoch unter Normalbedingungen von selbst oder unter äußerem Einfluss, z.B. von Wärme, UV-Licht etc., aushärtendes Material verstanden. Es kann sich dabei beispielsweise um Beton, Kunstharz, Klebstoff und ähnliches handeln.

Die Plattenelemente sind in der Ausnehmung lösbar befestigt. Dies kann beispielsweise mittels Verschraubung, Verrastung, Verklebung oder dergleichen geschehen. Zum Einlegen der Dichtung kann es erforderlich sein, zunächst nur einen Teil der Plattenelemente, z.B. das dritte Plattenelement, in der Ausnehmung zu fixieren, dann die Dichtung einzulegen und zur endgültigen Verankerung der Dichtung anschließend die restlichen, z.B. seitlichen Plattenelemente, anzuordnen und zu fixieren.

Die äußeren Plattenelemente liegen mit ihren von der Dichtung wegweisenden Flächen vorzugsweise an den gegenüberliegenden Seitenwänden der Ausnehmung an. Für den häufigen Fall, dass strangförmige Dichtungsprofile getestet werden sollen, sind Ausnehmung und Plattenelemente vorzugsweise ebenfalls im Wesentlichen strangförmig ausgebildet.

Die erfindungsgemäße Prüfvorrichtung kann beispielsweise zwei plane Platten umfassen, in deren eine Fläche jeweils eine entsprechende Ausnehmung eingebracht ist, in die jeweils entsprechende Plattenelemente eingelegt sind. Zur Durchführung der Prüfung wird in jede durch die Plattenelemente gebildete Nut eine Dichtung eingelegt und entweder über die Plattenelemente direkt oder indirekt über ein aushärtendes oder aushärtbares Material, z.B. Beton, in der Nut verankert, die Platten werden mit den die Ausnehmungen umfassenden Flächen gegeneinander gelegt, so dass die Platten planparallel angeordnet sind und die Dichtungen mit Ihren Dichtflächen aneinander zu liegen kommen, und verpresst. Zum Verpressen weist die erfindungsgemäße Prüfvorrichtung vorzugsweise entsprechende Einrichtungen auf, mit deren Hilfe die Platten gegeneinander verpresst werden können. Eine solche Prüfvorrichtung kann beispielsweise zur Prüfung des Kraft-Weg-Verhaltens eines strangförmigen Dichtungsprofils verwendet werden. Auch eine Dichtheitsprüfung ist mit einer erfindungsgemäß aufgebauten Prüfvorrichtung durchführbar, indem ein Dichtungsrahmen verwendet wird. Zu diesem Zweck sind die Ausnehmungen in den Plattenflächen ebenfalls rahmenartig ausgeführt und die Plattenelemente bilden eine rahmenartige entsprechend an die Dichtungsgeometrie angepasste Nut aus. Mittels zweier Bohrungen durch eine der Platten kann beispielsweise Wasser in den von dem Dichtungsrahmen umgrenzten Spalt zwischen den Platten geleitet und durch Anlegen eines geeigneten Gegendrucks eine Dichtigkeitsprüfung durchgeführt werden.

Die Prüfvorrichtung kann auch zum Testen eines Dichtungsversatzes verwendet werden. Hierzu können beispielsweise unterschiedliche Sätze von Plattenelementen verwendet werden, so dass die Dichtung in einer Platte gegenüber der Dichtung in der gegenüberliegenden Platte versetzt angeordnet ist. Selbstverständlich ist es auch durch Versatz der Platten oder der Ausnehmungen selbst möglich, eine solche Versatzsituation herzustellen.

In einer bevorzugten Ausführungsform umfasst die erfindungsgemäße Prüfvorrichtung mindestens drei Platten, wobei die erste Platte plan ist und die zweite und dritte Platte gewinkelt sind, so dass die zweite und dritte Platte jeweils zwei rechtwinklig zueinander stehende Schenkel aufweisen, und wobei die zweite und dritte Platte so angeordnet sind, dass die Flächen des einen Schenkels zueinander und die Flächen des anderen Schenkels zur Fläche der ersten Platte gewendet sind, wobei hier die Flächen gemeint sind, die die Ausnehmungen enthalten. Auf diese Weise ergibt sich eine im Querschnitt im Wesentlichen T-förmige Prüfvorrichtung, die beispielsweise für eine Prüfung des Kraft-Weg-Verhaltens oder der Dichtigkeit einer Dichtung im Falle einer Einbausituation im T-Stoß geeignet ist. Für die Dichtigkeitsprüfung einer Dichtung in einer solchen T-Stoß-Einbausituation wird in die Nut der ersten Platte ein planes rahmenartiges Dichtungsprofil eingesetzt, während in die Nuten der zweiten und dritten Platte jeweils ein Dichtungsrahmen mit zwei echten Rahmenecken eingesetzt wird, um die Situation bei Tübbingdichtungen zu simulieren, die im T-Stoß aneinanderstoßen.

Selbstverständlich umfasst die vorliegende Erfindung auch Ausführungsformen mit mehr als drei Platten. Denkbar ist beispielsweise eine Konstruktion mit vier Winkelplatten, so dass eine Prüfanordnung herstellbar ist, die die Situation bei einem Kreuzstoß simuliert.

Die Erfindung betrifft auch die Verwendung einer erfindungsgemäßen Prüfvorrichtung zur Dichtigkeitsprüfung oder zur Prüfung des Kraft-Weg-Verhaltens von Dichtungen mit Verankerungsfüßen, insbesondere Tübbingdichtungen, im T-Stoß oder Kreuz-Stoß.

Darüber hinaus betrifft die Erfindung auch ein Verfahren zur Prüfung von Dichtungen mit Verankerungsfüßen, insbesondere Tübbingdichtungen, im T-Stoß oder Kreuz-Stoß, wobei eine Dichtung, die mindestens einen Verankerungsfuß aufweist, in einer erfindungsgemäßen Prüfvorrichtung verankert und einer Prüfung auf Dichtigkeit oder des Kraft-Weg-Verhaltens unterzogen wird. Hierzu wird die Dichtung in geeigneter Weise, wie oben beschrieben, in der Prüfvorrichtung verankert und, beispielsweise durch Einleiten eines Fluids in die Prüfvorrichtung, mit einem Druck beaufschlagt, um die Dichtigkeit zu prüfen, und/oder durch Verpressen der Platten der Prüfvorrichtung auf ihr Kraft-Weg-Verhalten untersucht.

Die Erfindung wird im Folgenden anhand der angefügten Figuren rein zu Veranschaulichungszwecken näher erläutert.
Figur 1 zeigt einen Querschnitt (A) sowie eine perspektivische Darstellung (B) eines Ausschnittes eines Teils einer Ausführungsform einer erfindungsgemäßen Prüfvorrichtung.
Figur 2 zeigt einen Querschnitt durch einen Teil einer alternativen Ausgestaltung einer erfindungsgemäßen Prüfvorrichtung.
Figur 3 zeigt eine T-Stoß-Prüfvorrichtung gemäß der vorliegenden Erfindung.
Figur 4 zeigt eine perspektivische Darstellung der T-Stoß-Prüfvorrichtung aus Figur 2.

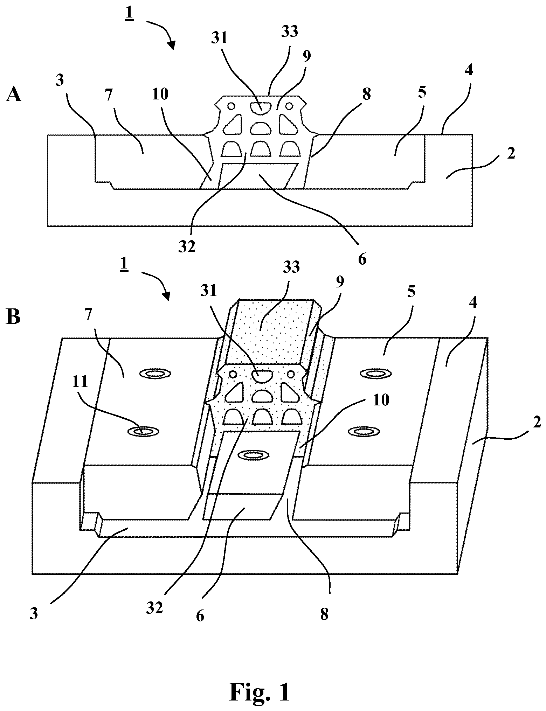

Figur 1 zeigt beispielhaft und schematisch einen Teil einer Platte einer Ausführungsform der erfindungsgemäßen Prüfvorrichtung. Der untere Teil (B) von Figur 1 zeigt eine perspektivische Darstellung eines Ausschnitts aus einer Platte 2 einer Ausführungsform einer erfindungsgemäßen Prüfvorrichtung 1, der obere Teil (A) einen Querschnitt durch diese Platte 2. In eine Platte 2, die beispielsweise aus Metall oder auch einem geeigneten Kunststoff, beispielsweise Polyoxymethylen (POM), Polytetrafluorethylen (PTFE) oder Polyetheretherketon (PEEK), bestehen kann, ist eine Ausnehmung 3 eingebracht. In die Ausnehmung 3 ist ein Satz von Plattenelementen 5, 6, 7 eingelegt, die zusammen so ausgestaltet sind, dass sie die Ausnehmung 3 derart ausfüllen, dass diese die Form einer Nut 8 erhält, die an die Basis 32 eines strangförmigen Dichtungsprofils 9 mit Verankerungsfüßen 10 angepasst ist. Der übersichtlicheren Darstellung wegen sind die Dichtung 9 und die Plattenelemente 5, 6, 7 hier teilweise entfernt. Bei der Dichtung 9 handelt es sich hier um eine aus dem Stand der Technik grundsätzlich bekannte strangförmige Tübbingdichtung. Die Dichtung 9 verfügt über zwei Verankerungsfüße 10, die von der Profilbasis 32 der Dichtung 9 ausgehen und von den Plattenelementen 5, 6, 7 derart eingefasst sind, dass die Dichtung 9 dadurch formschlüssig gehalten wird. Darüber hinaus sind in Längsrichtung der Dichtung 9 verlaufende Hohlräume 31 vorhanden. Eine derartige Dichtung 9 besteht regelmäßig aus einem geeigneten Elastomer, beispielsweise EPDM, SBR oder dergleichen. Die Plattenelemente 5, 6, 7 sind mittels entsprechender Befestigungseinrichtungen 11 lösbar in der Ausnehmung 3 befestigt. Bei dieser Ausführungsform, bei der eine Dichtung 9 mit zwei Verankerungsfüßen 10 vorhanden ist, sind drei Plattenelemente 5, 6, 7 vorhanden, wobei ein mittleres Plattenelement 6 zwischen zwei äußeren Plattenelementen 5, 7 angeordnet ist. Die zur Dichtung 9 weisenden Flächen der Plattenelemente 5, 6, 7 sind so ausgestaltet, dass sie die äußere Form der Profilbasis 32 der Dichtung 9 nachbilden. Zum Einbau der Dichtung 9 kann beispielsweise zunächst das mittlere Plattenelement 6 in der Ausnehmung 3 angeordnet und fixiert werden. Anschließend kann die Dichtung 9 auf das mittlere Plattenelement 6 gesetzt werden. Die Form des mittleren Plattenelementes 6 ist an die Form der jeweiligen Dichtung 9 angepasst, d.h. der Querschnitt des mittleren Plattenelements 6 ist so gewählt, dass die Dichtung 9 mit ihrer Basis 32 und den Innenseiten der Verankerungsfüße 10 an dem mittleren Plattenelement 6 anliegt. Schließlich können die beiden äußeren Plattenelemente 5, 7 in die Ausnehmung 3 eingelegt und fixiert werden. Auch diese Plattenelemente 5, 7 korrespondieren in ihrer Form mit der äußeren Form der Profilbasis 32 und der Verankerungsfüße 10 der Dichtung 9, d.h. die zur Dichtung 9 weisenden Flächen der Plattenelemente 5, 7 sind komplementär zur äußeren Form der Profilbasis 32 und der Verankerungsfüße 10 der Dichtung 9 ausgebildet. Nach dem Einbau der äußeren Plattenelemente 5, 7 ist die Dichtung 9 mittels Formschluss in der Platte 2 verankert. Die Ausnehmung 3 weist hier an ihren Rändern noch Absätze auf, die einem Verrutschen der äußeren Plattenelemente 5, 7 unter Belastung weiter entgegenwirken sollen und eine Zentrierung für optimalen Formschluss bewirken. Die äußeren Plattenelemente 5, 7 stoßen hier an die äußeren Wandungen der Ausnehmung 3 an. Abgesehen von der Nut 8 füllen die Plattenelemente 5, 6, 7 die Ausnehmung 3 in diesem Ausführungsbeispiel damit vollständig aus. Zwei solche Platten 2 mit jeweils einer darin eingelegten linearen strangförmigen Dichtung 9 können beispielsweise für eine Prüfung des Kraft-Weg-Verhaltens der Dichtung(en) 9 gegeneinander verpresst werden.

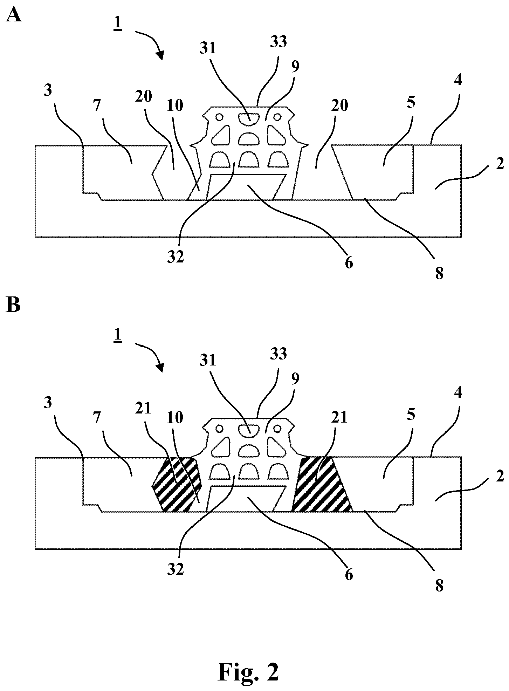

Figur 2 zeigt einen Querschnitt durch eine Platte 2 einer alternativen Ausgestaltung der erfindungsgemäßen Prüfvorrichtung 1. Gleiche Bezugsziffern entsprechen gleichen Elementen der in Figur 1 dargestellten Ausführungsform, so dass auf eine unnötige Wiederholung verzichtet wird. Bei dieser alternativen Ausgestaltung ist die Nut 8 mittels der Plattenelemente 5, 6, 7 nicht so ausgebildet, dass die Geometrie der Dichtungsbasis 32 nachgebildet ist, sondern die Nut 8 ist mittels der Plattenelemente 5, 6, 7 derart ausgestaltet, dass zu beiden Seiten der Dichtung 9 ein Zwischenraum 20 gebildet ist, der in Figur 2A in unverfülltem Zustand, in Figur 2B in mit einem aushärtenden/aushärtbaren Material 21 verfüllten Zustand dargestellt ist. Zur Veranschaulichung sind die äußeren Plattenelemente 5, 7 in unterschiedlicher Ausgestaltung dargestellt. Das Plattenelement 5 weist eine Hinterschneidung auf, während das Plattenelement 7 eine im Querschnitt keilförmige Ausnehmung aufweist. Diese oder ähnliche Ausformungen sorgen dafür, dass das aushärtende/aushärtbare Material 21 nach dem Aushärten zumindest auch formschlüssig von den Plattenelementen 5, 7 gehalten wird. Die Dichtung 9 ist in das Material 21 eingebettet und wird insgesamt durch den Formschluss zwischen den Plattenelementen 5, 6, 7 und dem ausgehärteten Material 21 einerseits sowie zwischen dem ausgehärteten Material 21 und den Verankerungsfüßen 10 andererseits formschlüssig gehalten. Das Material 21 kann beispielsweise Beton sein, wodurch sich die Einbausituation in einem Betonbauteil, z.B. einem Betontübbing, besonders realistisch nachstellen lässt. Zur Herstellung dieser alternativen Ausgestaltung der erfindungsgemäßen Prüfvorrichtung 1 können die Plattenelemente 5, 6, 7 in der Ausnehmung 3 befestigt werden, z.B. durch Festschrauben oder Kleben. Anschließend wird die Dichtung 9 auf das mittlere Plattenelement 6 gesetzt. Alternativ können die äußeren Plattenelemente 5, 7 auch nach dem Aufsetzen der Dichtung 9 auf das mittlere Plattenelement 6 fixiert werden. Anschließend wird das aushärtende/aushärtbare Material 21 in den Zwischenraum 20 eingebracht, z.B. eingegossen. Das Material 21 härtet unter Normalbedingungen entweder von selbst aus, oder es wird unter Einwirkung äußerer Faktoren, z.B. unter UV-Licht und/oder Erhitzen, ausgehärtet. Nach dem Aushärten ist die Prüfvorrichtung 1 einsatzbereit.

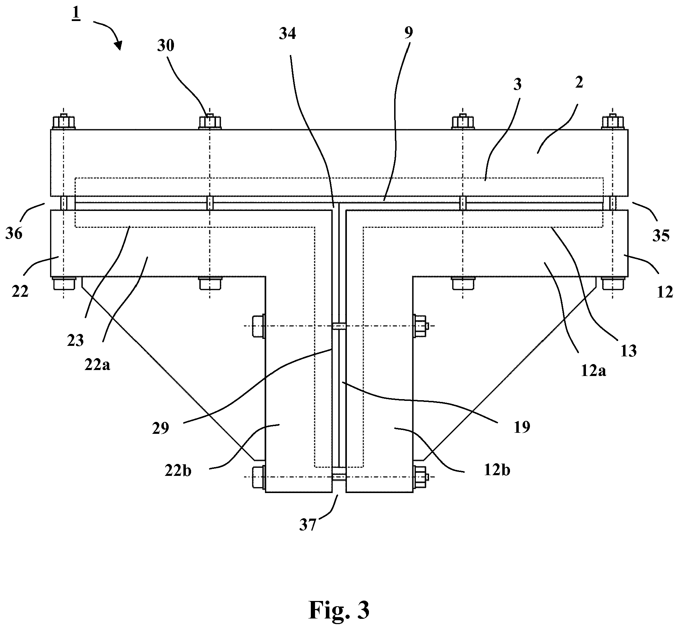

Figur 3 zeigt schematisch eine Ausführungsform einer erfindungsgemäßen Prüfvorrichtung zur Prüfung von Dichtungen mit Verankerungsfüßen im T-Stoß. Bei dieser Prüfvorrichtung wird eine Einbausituation simuliert, wie sie insbesondere im Tunnelbau häufig vorkommt, wenn Tübbinge so aneinander stoßen, dass die Ring- und Längsfugen unter Ausbildung T-förmiger Fugen aufeinandertreffen. Die Prüfvorrichtung 1 gemäß dieser Ausführungsform umfasst drei Platten 2, 12, 22, deren Aufbau im Prinzip derjenigen aus Figur 1 entspricht. Allerdings sind hier zwei der drei Platten 2, 12, 22, hier die zweite und dritte Platte 12, 22, als im Querschnitt im Wesentlichen L-förmige Winkelplatten ausgeführt. Die Winkelplatten 12, 22 weisen zwei im rechten Winkel aufeinander stehende Schenkel 12a, b, 22a, b auf, und liegen jeweils mit den Flächen 14b, 24b eines Schenkels 12b, 22b aneinander und mit dem jeweils anderen Schenkel 12a, 22a an der Fläche 4 der planen ersten Platte 2 an, so dass eine im wesentlichen T-förmige Struktur resultiert. Die Platten 12, 22 können selbst verständlich auch beispielsweise im Querschnitt quadratisch ausgestaltet sein. Entscheidend ist lediglich, dass die Ausnehmungen 13, 23 in den beiden gewinkelten Flächen 14a, b, 24 a, b vorhanden sind. Die plane erste Platte 2 bildet eine Art Deckel, der die Flächen 14a, 24a (s. Figur 3) der Winkelplatten 12, 22 vorzugsweise vollständig abdeckt. Jede der Platten 2, 12, 22 weist jeweils eine hier rahmenartige, d.h. rechteckförmige Ausnehmung 3, 13, 23 auf, in denen jeweils Plattenelemente 5, 6, 7, 15, 16, 17, 25, 26, 27 (s. Figur 3) angeordnet sind. Die Plattenelemente 5, 6, 7, 15, 16, 17, 25, 26, 27 können jeweils einstückig oder aus mehreren Teilen zusammengesetzt sein. In die mittels der Plattenelemente 5, 6, 7, 15, 16, 17, 25, 26, 27 gebildeten Nuten 8, 18, 28 sind jeweils rahmenartige Dichtungen 9, 19, 29 eingesetzt und wie oben für Figur 1 beschrieben verankert. Die in die erste Platte 2 eingelegte Dichtung 9 ist plan, die in die zweite Platte 12 und die dritte Platte 22 eingelegten Dichtungen 19, 29 sind entsprechend der Winkelstruktur der Platten 12, 22 bzw. der Ausnehmungen 3, 13 abgewinkelt, so dass echte Rahmenecken 34 gebildet sind. Die Dichtungen 9, 19, 29 kommen dabei mit ihren Dichtflächen 33 aufeinander zu liegen, wobei es auch möglich ist, einen bestimmten Versatz einzustellen, um das Verhalten bei einem Dichtungsversatz zu prüfen. Mittels Verspanneinrichtungen 30 können die Platten 2, 12, 22 gegeneinander verspannt werden, so dass die Dichtungen 9, 19, 29 gegeneinander verpresst werden. Diese Prüfvorrichtung 1 eignet sich für Dichtigkeitsprüfungen, wobei hierzu ein Fluid, z.B. Wasser, mittels geeigneter (hier nicht dargestellter) Vorrichtungen, die z.B. Bohrungen durch mindestens eine der Platten 2, 12 22 umfassen können, in die Prüfvorrichtung 1 geleitet werden kann, um einen geeigneten Druck an den Dichtungen 9, 19, 29 anzulegen. Die Anordnung kann auch so ausgestaltet sein, dass sie zur Prüfung des Kraft-Weg-Verhaltens an der Rahmenecke verwendet werden kann. In diesem Fall sind die Ausnehmungen 3, 13, 23 und Nuten 8, 18, 28 vorzugsweise jeweils nicht rahmenartig, sondern linear ausgebildet und dienen der Aufnahme eines entsprechenden Dichtungsprofilstreifens. In diesem Fall werden die offenen Enden 35, 36, 37 der Prüfvorrichtung 1 vorzugsweise durch Endplatten (nicht dargestellt) verschlossen.

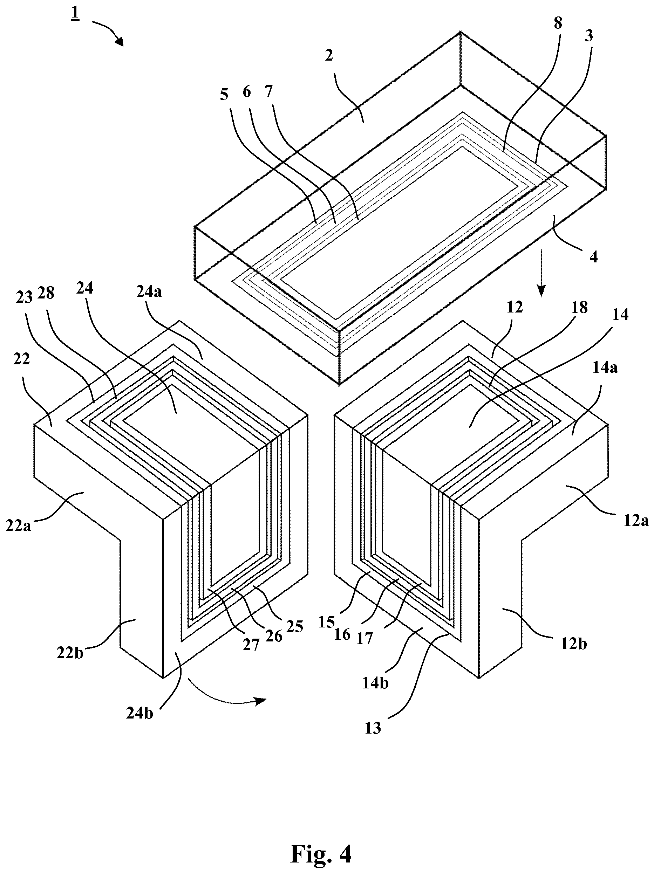

Figur 4 zeigt die in Figur 3 dargestellte Prüfvorrichtung 1 in einer vereinfachten räumlichen Ansicht. Die rahmenartigen Dichtungen 9, 19, 29 sind nicht dargestellt. Dargestellt sind die Platten 2, 12, 22 mit den in die Ausnehmungen 3, 13, 23 eingelegten und die Nuten 8, 18, 28 bildenden Plattenelementen 5, 6, 7, 15, 16, 17, 25, 26, 27. Pfeile deuten an, wie die Prüfvorrichtung 1 nach dem Einlegen der Dichtungen 9, 19, 29 zusammengesetzt wird. Verspannungseinrichtungen 30, Bohrungen zur Zuführung eines Fluids für die Dichtigkeitsprüfung etc. sind der besseren Übersicht halber nicht eingezeichnet.

## Patentansprüche

1. Prüfvorrichtung (1) zur Prüfung von Dichtungen (9, 19, 29), insbesondere Tübbingdichtungen, mit mindestens einem Verankerungsfuß (10), wobei
a. die Prüfvorrichtung (1) mindestens eine erste Platte (2) mit einer eine erste Ausnehmung (3) aufweisenden ersten Fläche (4) und mindestens eine zweite Platte (12) mit einer eine zweite Ausnehmung (13) aufweisenden zweiten Fläche (14) umfasst, wobei die Flächen (4, 14) der Platten (2, 12) einander zumindest teilweise mit ihren Ausnehmungen (3, 13) im Wesentlichen gegenüberliegen, und
b. in der ersten und zweiten Ausnehmung (3, 13) jeweils mindestens zwei Plattenelemente (5, 7; 15, 17) lösbar befestigt sind, wobei die Plattenelemente (5, 7; 15, 17) so ausgestaltet und angeordnet sind, dass sie in den Ausnehmungen (3, 13) jeweils eine Nut (8, 18) ausbilden, in die eine mindestens einen Verankerungsfuß (10) aufweisende Dichtung (9, 19) derart einlegbar ist, dass
i. die Dichtung (9, 19) mittels eines zwischen den Plattenelementen (5, 7; 15, 17) und dem mindestens einen Verankerungsfuß (10) gebildeten Formschlusses verankert ist, oder
ii. zwischen den Plattenelementen (5, 7; 15, 17) und dem mindestens einen Verankerungsfuß (10) der Dichtung (9, 19) ein Zwischenraum (20) gebildet ist, in den ein aushärtendes oder aushärtbares Material (21) einbringbar ist, so dass die Dichtung (9, 19) nach dem Aushärten des Materials (21) mittels eines zwischen den Plattenelementen (5, 7; 15, 17), dem ausgehärteten Material (21) und dem mindestens einen Verankerungsfuß (10) gebildeten Formschlusses verankert ist.

2. Prüfvorrichtung nach Anspruch 1, wobei in der ersten und zweiten Ausnehmung (3, 13) jeweils zwei äußere Plattenelemente (5, 7; 15, 17) und ein dazwischen angeordnetes mittleres Plattenelement (6, 16) lösbar befestigt sind, und wobei die Plattenelemente (5, 6, 7; 15, 16, 17) so ausgestaltet sind, dass sie in den Ausnehmungen (3, 13) jeweils eine Nut (8, 18) ausbilden, in die eine zwei Verankerungsfüße (10) aufweisende Dichtung (9, 19) derart einlegbar ist, dass sie mittels eines zwischen den Plattenelementen (5, 6, 7; 15, 16, 17) und den Verankerungsfüßen (10) gebildeten Formschlusses verankert ist, oder zwischen den äußeren Plattenelementen (5, 7; 15, 17) und den ihnen zugewendeten Flanken der zwei Verankerungsfüße (10) ein Zwischenraum (20) gebildet ist, in den das aushärtende oder aushärtbare Material (21) einbringbar ist, so dass die Dichtung (9, 19) nach dem Aushärten des Materials (21) mittels eines zwischen den Plattenelementen (5, 6, 7; 15, 16, 17), dem ausgehärteten Material (21) und den Verankerungsfüßen (10) gebildeten Formschlusses verankert ist.

3. Prüfvorrichtung nach einem der Ansprüche 1 oder 2, wobei die Prüfvorrichtung (1) mindestens drei Platten (2, 12, 22) umfasst, wobei die erste Platte (2) eben ist und die zweite und dritte Platte (12, 22) gewinkelt sind, so dass die zweite und dritte Platte (12, 22) jeweils zwei rechtwinklig zueinander stehende Schenkel (12a, 12b; 22a, 22b) aufweisen, und wobei die zweite und dritte Platte (12, 22) so angeordnet sind, dass die Flächen (14b, 24b) des einen Schenkels (18, 28) zueinander und die Flächen (14a, 24a) des anderen Schenkels zur Fläche (4) der ersten Platte (2) gewendet sind.

4. Prüfvorrichtung nach einem der vorhergehenden Ansprüche mit in die Nuten (8, 18; 28) eingelegten Dichtungen (9, 19; 29).

5. Prüfvorrichtung nach einem der vorhergehenden Ansprüche, wobei die Plattenelemente 5, 6, 7, 15, 16, 17, 25, 26, 27) einstückig oder mehrstückig ausgebildet sind.

6. Prüfvorrichtung nach einem der vorhergehenden Ansprüche, wobei das aushärtende oder aushärtbare Material (21) Beton, Kunstharz oder Klebstoff ist.

7. Prüfvorrichtung nach einem der vorhergehenden Ansprüche, wobei die Prüfvorrichtung (1) Einrichtungen (30) aufweist, mit deren Hilfe die Platten (2, 12; 2, 12, 22) gegeneinander verspannt werden können.

8. Verwendung einer Prüfvorrichtung nach einem der Ansprüche 1 bis 7 zur Dichtigkeitsprüfung oder zur Prüfung des Kraft-Weg-Verhaltens von Dichtungen mit Verankerungsfüßen, insbesondere Tübbingdichtungen, im T-Stoß oder Kreuz-Stoß.

9. Verfahren zur Prüfung von Dichtungen mit Verankerungsfüßen, insbesondere Tübbingdichtungen, im T-Stoß oder Kreuz-Stoß, wobei eine Dichtung, die mindestens einen Verankerungsfuß aufweist, in einer Prüfvorrichtung nach einem der Ansprüche 1 bis 7 verankert und einer Prüfung auf Dichtigkeit oder des Kraft-Weg-Verhaltens unterzogen wird.

## Claims

1. A testing device (1) for testing seals (9, 19, 29), in particular tubbing seals, having at least one anchoring foot (10), wherein
a. the testing device (1) comprises at least one first plate (2) having a first surface (4) comprising a first recess (3) and at least one second plate (12) having a second surface (14) comprising a second recess (13), wherein the surfaces (4, 14) of the plates (2, 12) substantially oppose one another at least partially with their recesses (3, 13), and
b. in each case at least two plate elements (5, 7; 15, 17) are releasably fastened in the first and second recess (3, 13), wherein the plate elements (5, 7; 15, 17) are designed and arranged such that they form in each case a groove (8, 18) in the recesses (3, 13), a seal (9, 19) having at least one anchoring foot (10) being able to be inserted into said groove, such that
i. the seal (9, 19) is anchored by means of a positive connection formed between the plate elements (5, 7; 15, 17) and the at least one anchoring foot (10), or
ii. an intermediate space (20) is formed between the plate elements (5, 7; 15, 17) and the at least one anchoring foot (10) of the seal (9, 19), a curing or curable material (21) being able to be introduced therein, so that after the curing of the material (21) the seal (9, 19) is anchored by means of a positive connection formed between the plate elements (5, 7; 15, 17), the cured material (21) and the at least one anchoring foot (10).

2. The testing device according to claim 1, wherein in each case two outer plate elements (5, 7; 15, 17) and a central plate element (6, 16) arranged therebetween are releasably fastened in the first and second recess (3, 13), and wherein the plate elements (5, 6, 7; 15, 16, 17) are designed such that they form in each case a groove (8, 18) in the recesses (3, 13), a seal (9, 19) having two anchoring feet (10) being able to be inserted therein such that it is anchored by means of a positive connection formed between the plate elements (5, 6, 7; 15, 16, 17) and the anchoring feet (10), or an intermediate space (20) is formed between the outer plate elements (5, 7; 15, 17) and the flanks of the two anchoring feet (10) facing said plate elements, the curing or curable material (21) being able to be introduced therein so that, after the material (21) has cured, the seal (9, 19) is anchored by means of a positive connection formed between the plate elements (5, 6, 7; 15, 16, 17), the cured material (21) and the anchoring feet (10).

3. The testing device according to one of claims 1 or 2, wherein the testing device (1) comprises at least three plates (2, 12, 22), wherein the first plate (2) is planar and the second and third plates (12, 22) are angled so that the second and third plates (12, 22) in each case comprise two limbs (12a, 12b; 22a, 22b) located at right angles to one another, and wherein the second and third plates (12, 22) are arranged such that the surfaces (14b, 24b) of the one limb (18, 28) face one another and the surfaces (14a, 24a) of the other limb face the surface (4) of the first plate (2).

4. The testing device according to one of the preceding claims, comprising seals (9, 19; 29) inserted into the grooves (8, 18; 28).

5. The testing device according to one of the preceding claims, wherein the plate elements (5, 6, 7, 15, 16, 17, 25, 26, 27) are configured in one piece or in multiple pieces.

6. The testing device according to one of the preceding claims, wherein the curing or curable material (21) is concrete, synthetic resin or adhesive.

7. The testing device according to one of the preceding claims, wherein the testing device (1) comprises devices (30), the plates (2, 12; 2, 12, 22) being able to be tensioned relative to one another thereby.

8. Use of a testing device according to one of claims 1 to 7 for testing the tightness or for testing the force-distance behaviour of seals having anchoring feet, in particular tubbing seals, in a T-joint or cross-joint.

9. A method for testing seals having anchoring feet, in particular tubbing seals, in a T-joint or cross-joint, wherein a seal which comprises at least one anchoring foot is anchored in a testing device according to one of claims 1 to 7 and is subjected to a tightness or force-distance behaviour test.

## Revendications

1. Dispositif d'essai (1) pour l'essai de joints (9, 19, 29), notamment de joints de cuvelage, avec au moins un pied d'ancrage (10),
a. le dispositif d'essai (1) comprenant au moins une première plaque (2) avec une première surface (4) comportant un premier évidement (3) et au moins une deuxième plaque (12) avec une deuxième surface (14) comportant un deuxième évidement (13), les surfaces (4, 14) des plaques (2, 12) se faisant sensiblement face au moins partiellement par leurs évidements (3, 13) et
b. dans le premier et le deuxième évidements (3, 13) étant fixés de manière amovible respectivement au moins deux éléments (5, 7; 15, 17) de plaque, les éléments (5, 7; 15, 17) de plaque étant conçus et placés de sorte à former dans les évidements (3, 13) chaque fois une rainure (8, 18) dans laquelle un joint (9, 19) comportant au moins un pied d'ancrage (10) est insérable de telle sorte
i. que le joint (9, 19) soit ancré au moyen d'une complémentarité de forme créée entre l'élément (5, 7; 15, 17) de plaque et l'au moins un pied d'ancrage (10) ou
ii. qu'entre les éléments (5, 7; 15, 17) de plaque et l'au moins un pied d'ancrage (10) du joint (9, 19) il soit formé un espace intermédiaire (20) dans lequel peut être insérée une matière (21) durcissante ou durcissable, de sorte qu'après le durcissement de la matière (21), le joint (9, 19) soit ancré au moyen d'une complémentarité de forme créée entre les éléments (5, 7; 15, 17) de plaque, la matière (21) durcie et l'au moins un pied d'ancrage (10).

2. Dispositif d'essai selon la revendication 1, dans le premier et le deuxième évidements (3, 13) étant fixés de manière amovible chaque fois deux éléments (5, 7; 15, 17) de plaque extérieurs et un élément de plaque (6, 16) central et les éléments (5, 6, 7; 15, 16, 17) de plaque étant conçus de sorte à former dans les évidements (3, 13) chaque fois une rainure (8, 18) dans laquelle un joint (9, 19) comportant deux pieds d'ancrage (10) est insérable de sorte à être ancré au moyen d'une complémentarité de forme créée entre les éléments (5, 6, 7; 15, 16, 17) de plaque et les pieds d'ancrage (10) ou de sorte qu'entre les éléments de plaque (5, 7; 15, 17) extérieurs et les flancs qui lui font face des deux pieds d'ancrage (10), il soit formé un espace intermédiaire (20) dans lequel la matière (21) durcissante ou durcissable est insérable de sorte qu'après le durcissement de la matière (21), le joint (9, 19) soit ancré par une complémentarité de forme créée entre les éléments (5, 7; 15, 17) de plaque, la matière (21) durcie et les pieds d'ancrage (10).

3. Dispositif d'essai selon l'une quelconque des revendications 1 ou 2, le dispositif d'essai (1) comportant au moins trois plaques (2, 12, 22), la première plaque (2) étant plane et la deuxième et troisième plaques (12, 22) étant coudées, de sorte que la deuxième et la troisième plaques (12, 22) comportent chacune deux branches (12a, 12b; 22a, 22b) debout à angle droit l'une par rapport à l'autre et la deuxième et la troisième plaques (12, 22) étant placées de telle sorte que les surfaces (14b, 24b) de l'une des branches (18, 28) soit tournées l'une vers l'autre et les surfaces (14a, 24a) de l'autre branche soient tournées vers la surface (4) de la première plaque (2).

4. Dispositif d'essai selon l'une quelconque des revendications précédentes, avec des joints (9, 19; 29) insérés dans les rainures (8, 18; 28).

5. Dispositif d'essai selon l'une quelconque des revendications précédentes, les éléments (5, 6, 7, 15, 16, 17, 25, 26, 27) de plaque étant conçus en une partie ou en plusieurs parties.

6. Dispositif d'essai selon l'une quelconque des revendications précédentes, la matière (21) durcissante ou durcissable étant du béton, de la résine synthétique ou un agent adhésif.

7. Dispositif d'essai selon l'une quelconque des revendications précédentes, le dispositif d'essai (1) comportant des systèmes (30) à l'aide desquels les plaques (2, 12; 12, 12, 22) peuvent être précontraintes les unes contre les autres.

8. Utilisation d'un dispositif d'essai selon l'une quelconque des revendications 1 à 7 pour tester l'étanchéité ou pour tester le comportement force-course de joints avec des pieds d'ancrage, notamment de joints de cuvelage, dans l'aboutement en T ou dans l'aboutement en croix.

9. Procédé d'essai de joints avec des pieds d'ancrage, notamment de joints de cuvelage, dans l'aboutement en T ou dans l'aboutement en croix, lors duquel on ancre un joint qui comporte au moins un pied d'ancrage dans un dispositif d'essai selon l'une quelconque des revendications 1 à 7 et on le soumet à un essai d'étanchéité ou du comportement force-course.
